# EUROPÄISCHE PATENTSCHRIFT

(11) **EP 1 973 843 B1**
(45) Veröffentlichungstag und Bekanntmachung des Hinweises auf die Patenterteilung: **23.05.2012**
(21) Anmeldenummer: 06830362.7
(22) Anmeldetag: 05.12.2006
(51) Int. Cl.: C01B 17/66

(54) **VERFAHREN ZUR OBERFLÄCHENBEHANDLUNG VON DITHIONIT**
PROCESS FOR THE SURFACE TREATMENT OF DITHIONITE
PROCEDE DE TRAITEMENT DE SURFACE DE DITHIONITE

(30) Priorität: 09.12.2005 DE 102005058854
(43) Veröffentlichungstag der Anmeldung: 01.10.2008
(73) Patentinhaber: BASF SE, 67056 Ludwigshafen (DE)
(72) Erfinder: SCHNEIDER, Reinhard, 67136 Fussgönheim (DE); DORRA, Holger, 67071 Ludwigshafen (DE); BECKMANN, Eberhard, 67435 Neustadt (DE)
(74) Vertreter: Ellwanger, Arndt
(86) Internationale Anmeldenummer: PCT/EP2006/069312
(87) Internationale Veröffentlichungsnummer: WO 2007/065890

(56) Entgegenhaltungen:
- DE-A1- 2 847 687
- US-A- 3 923 960
- US-A- 4 973 471

## Beschreibung

Die Erfindung betrifft ein Verfahren zur Oberflächenbehandlung von Alkalidithionit, insbesondere von Natriumdithionit, mit einem organischen Lösungsmittel, in dem eine alkalisch reagierende Verbindung gelöst ist sowie das über dieses Verfahren herstellbare Alkalidithionit.

Dithionit (S₂O₄²⁻), dessen wirtschaftlich bedeutendster Vertreter Natriumdithionit (NaS₂O₄) ist, wird auch als Hydrosulfit bezeichnet. Dithionite sind nicht auf das vorstehende Natriumsalz beschränkt, sondern können ebenso für die übrigen Alkalimetalle hergestellt werden. Die Bezeichnung Dithionit, insbesondere im Fall von Natriumdithionit, ist jedoch auch als Handelsbezeichnung (Handelsname) ebenso wie die Bezeichnung Hydrosulfit weit verbreitet. Folglich versteht man unter Hydrosulfit oder Alkalidithionit ganz allgemein ein Produktgemisch, das hauptsächlich das gewünschte Verfahrensprodukt Alkalidithionit (nachfolgend als reines Alkalidithionit bezeichnet) sowie - je nach verwendeten Herstellungsverfahren - weitere Nebenprodukte wie Sulfite (SO₃²⁻), Disulfite (S₂O₅²⁻), Thiosulfate (S₂O₃²⁻) oder Formiate (HCOO⁻) der entsprechenden Natriumverbindungen sowie gegebenenfalls weitere Edukte als Verunreinigungen enthält.

Der wirtschaftlich bedeutendste Vertreter der Alkalidithionite, Natriumdithionit, kann auf verschiedene Arten hergestellt werden. Als kommerzielle Herstellungsverfahren gibt es unter anderem die Reduktion von Schwefeldioxid (SO₂ mit Zink, Natriumamalgam oder auf elektrochemische Weise. Als Herstellungsverfahren ist jedoch weltweit das so genannte Formiatverfahren am Bedeutendsten, wie es beispielsweise in DE-A 1 592 013 oder DE-A 27 03 282 beschrieben ist. Dieses Verfahren hat gegenüber den anderen Verfahren den Vorteil, dass das Dithionit als kristallines Produkt ausfällt, während es bei den übrigen Verfahren aufwendig aus wässriger Lösung isoliert werden muss. Wie nachstehend noch ausführlich diskutiert, ist eine möglichst weitgehende Abtrennung der als Produkt anfallenden Dithionite von Wasser von sehr großer Bedeutung für die Produktstabilität.

Beim Formiatverfahren werden gemäß Reaktionsgleichung (1) in Methanol Natronlauge, Natriumformiatlösung und SO₂ zur Reaktion gebracht.

NaOH + NaHCOO + 2 SO₂ → Na₂S₂O₄ + H₂O + CO₂ (1)

Die Reaktionsmischung ist eine Suspension, die Reaktionstemperatur wird bei 80°C gehalten. Natriumhydroxid, Natriumformiat, Methanol und Wasser werden vorgelegt, anschließend wir SO₂ dosiert und der pH-Wert durch kontinuierliche SO₂ Dosierung bei 5,0 bis 6,0 gehalten. Nach einigen Stunden ist die CO₂ Entwicklung beendet und das entstandene Produkt Natriumdithionit wird abfiltriert. Natriumdithionit besteht zu ca. 87 bis 92 Gew.-% (Gewichtsprozent) aus reinem Natriumdithionit, die weiteren Bestandteile sind hauptsächlich Natriumsulfit/Natriumdisulfit sowie etwas Natriumthiosulfat und Natriumformiat. Das abfiltrierte Produkt wird mit Methanol gewaschen und anschlie-βend getrocknet.

Nachteilig bei nach dem Formiatverfahren hergestellten Dithioniten ist jedoch, dass auf Grund der Herstellung in saurer Suspension auch nach dem Trocknen Säurereste auf dem Produkt verbleiben (saures Korn). Zudem ist es schwierig, das anhaftende Restwasser vollständig zu entfernen, vor allem auch, weil sich Alkalidithionit, insbesondere Hydrosulfit, bei Temperaturen über 100°C spontan und heftig zersetzen kann. In Alkalidithioniten enthaltenes Restwasser sowie anhaftende Säure haben jedoch auch bei Raumtemperatur den unerwünschten Nebeneffekt, dass beide zersetzend auf das entsprechende Dithionit wirken, wobei SO₂ freigesetzt wird. Handelsübliches Hydrosulfit riecht nach dem Öffnen oft sehr stark nach SO₂. Dieser Geruch ist nicht nur sehr unangenehm, sondern auch giftig (MAK-Wert liegt bei 2,5 ppm). Je höher der Gehalt an Restwasser im Produkt ist, umso schneller zersetzt sich das entsprechende Alkalidithionit unter Bildung von SO₂. Folglich besteht ein starkes Bemühen, aus dem isolierten Produkt das Restwasser und Säurespuren möglichst weitgehend zu entfernen bzw. das isolierte Produkt unter Feuchtigkeitsausschluss aufzubewahren.

Eine gewisse Stabilisierung kann dadurch erreicht werden, dass - insbesondere bei nach dem Formiatverfahren hergestelltem Alkalidithionit - zur Stabilisierung 1 bis 3 Gew.-% Soda (Na₂CO₃) zugesetzt wird, da ein alkalischer pH-Wert des Produktes zu einer geringeren oder zumindest langsameren Zersetzung führt. So enthält unter dem Handelsnamen Hydrosulfit vertriebenes Natriumdithionit (mit einem Natriumdithionit-Anteil von in der Regel ca. 87 bis 92 Gew.-%) generell 1 bis 3 Gew.-% Soda zur Stabilisierung. Trotz der Zugabe von Soda kommt es bei dieser Methode weiterhin zu einer Zersetzung des Dithionits unter Bildung von SO₂ - allerdings in geringerem Umfang als bei unbehandeltem saurem Korn -, da die Produktoberfläche durch den zugegebenen Feststoff Soda nicht wirkungsvoll geschützt werden kann, d. h., Dithionit liegt immer noch als saures Korn vor und/oder das Restwasser ist nur zu einem geringen Anteil entfernt. Auch durch erhöhte Sodazugabe kann dieser Prozess nicht gestoppt werden, außerdem würde dadurch der Anteil an reinem Dithionit im Handelsprodukt Hydrosulfit weiter gesenkt werden. Dass die Sodazugabe nur eine teilweise Umwandlung des sauren in alkalischen Kern bewirkt, kann auch dadurch gezeigt werden, dass wässrige Lösungen von nach dem Formiatverfahren hergestelltem Alkalidithionit trotz Sodazugabe einen neutralen bis sauren pH-Wert aufweisen.
Das Stabilitätsproblem von Natriumdithionit auf Grund der im Feststoff vorhandenen Säurespuren sowie des Restwassers wird in den oben beschriebenen, das Formiatverfahren betreffenden Dokumenten (DE-A 1 592 013 sowie DE-A 27 03 282) nicht weiter erörtert. Das abfiltrierte Produkt wird ausschließlich mit Methanol gewaschen, wodurch sich das in der Reaktion vorhandene / gebildete Wasser und die Säurereste jedoch nur unvollständig entfernen lassen.

SU-A 1 065 335 betrifft ein Verfahren zur Reinigung von Natriumdithionit unter Verwendung von Natronlauge bei erhöhten Temperaturen. Natriumdithionit wird dabei in zwei Stufen mit Natronlauge behandelt, wobei in der ersten Stufe Natronlauge im Unterschuss gegenüber Natriumdithionit, im zweiten Verfahrensschritt jedoch im Überschuss eingesetzt wird. Zwischen diesen beiden Verfahrensschritten wird das Produkt von der verwendeten Natronlauge abfiltriert. Mit dieser Methode können zwar Säurespuren im Produkt entfernt werden, jedoch muss anschließend mindestens ein Trocknungsschritt durchgeführt werden, um das vorhandene Wasser zumindest teilweise aus dem Produkt Natriumdithionit entfernen zu können.

JP - A 4 844 192 betrifft ein Verfahren zur Herstellung von Hydrosulfiten basierend auf dem Formiatverfahren. Die isolierten Hydrosulfit-Kristalle werden abschließend bei 60 °C mit Methanol gewaschen, wobei Methanol Na₂CO₃ enthält. Hierbei ist allerdings festzustellen, dass Soda in Methanol äußerst schwer löslich ist. Bei 25°C lösen sich nur 0,311 g Na₂CO₃ in 100 g Methanol (V.A. Stenger, J. Chem. Eng. Data, 1996, 41, Seiten 1111-1113). Die dabei gelöste Menge an Na₂CO₃ ist nicht ausreichend, um den pH-Wert des Kornes zu erhöhen sowie das vorhandene Wasser vollständig zu entfernen. Sofern Na₂CO₃ im Überschuss verwendet wird (also eine größere Na₂CO₃-Menge als in Methanol löslich), verteilt sich Soda als Feststoff auf der Oberfläche des Produktes (Hydrosulfit), wodurch der schon obenstehend beschriebende Effekt der Sodazugabe auf das fertige Produkt erzielt wird (Herstellung von alkalischem Korn). Da der Soda-Niederschlag sich aber nicht vollständig auf der Produktoberfläche verteilen kann, bleiben immer noch Inseln zurück, die als saures Korn bezeichnet werden können, zudem ist die Wasserentfernung unvollständig.

Der vorliegenden Erfindung liegt somit die Aufgabe zu Grunde, stabileres Alkalidithionit bereitzustellen, also die Alkalidithionit, das eine verbesserte Haltbarkeit aufweist. Unter verbesserter Haltbarkeit soll insbesondere verstanden werden, dass die Alkalidithionite zu geringerer Zersetzung unter SO₂-Entwicklung neigen.

Erfindungsgemäß wird diese Aufgabe durch ein. Verfahren zur Oberflächenbehandlung von Alkalidithionit gelöst, indem Alkalidithionit mit einem organischen Lösungsmittel behandelt wird, wobei in dem organischen Lösungsmittel eine alkalisch reagierende Verbindung zu mindestens 1 Gew.-%, bezogen auf die Menge an -Alkalidithionit', gelöst ist, wobei die alkalisch reagierende Verbindung ein Alkoholat ist.

Das erfindungsgemäße Verfahren hat den Vorteil, dass dadurch stabilieres Alkalidithionit hergestellt werden kann, das eine verringerte SO₂-Emission über dem Produkt sowie einen verbesserten Geruch aufweist. Das mit dem erfindungsgemäßen Verfahren hergestellte Alkalidithionit zeigt zudem eine verbesserte Stabilität bezüglich der thermischen Zersetzung sowie eine geringere Neigung zum Verklumpen.

Ein weiterer Vorteil des erfindungsgemäßen Verfahrens ist, dass jedes Alkalidithionit, unabhängig von dessen Herstellung, der Oberflächenbehandlung unterzogen werden kann. Sofern Alkalidithionit eine saure Oberfläche aufweist (saures Korn), was bei nach dem Formiatverfahren hergestelltem Alkalidithionit die Regel ist, werden durch das erfindungsgemäße Verfahren diese Säurespuren von der Komoberfläche entfernt. Unabhängig vom eingesetzten Alkalidithionit wird durch das erfindungsgemäße Verfahren der Wassergehalt auf der Produktoberfläche deutlich reduziert, was zu einer erhöhten Stabilität des Produktes führt: Weiterhin ist von Vorteil, dass durch die erhöhte Stabilisierung es nicht mehr erforderlich ist, dem hergestellten Alkalidithionit Soda zur Stabilisierung beizugeben, wodurch ein höherer Reinheitsgrad der Handelsware erzielt wird.

Als Alkalidithionit kann prinzipiell jedes Alkalidithionit unabhängig von dessen Herstellungsverfahren eingesetzt werden. Vorzugsweise wird Natriumdithionit, besonders bevorzugt Natriumdithionit, das nach dem Formiatverfahren hergestellt worden ist, eingesetzt. Das entsprechende Alkalidithionit kann dabei prinzipiell in reiner Form - reines Alkalidithionit, vorzugsweise reines Natriumdithionit - oder aber auch mit einem geringeren Reinheitsgrad, wie es beispielsweise in Handelsprodukten vorliegt, eingesetzt werden, vorzugsweise wird das entsprechende Alkalidithionit in einem Reinheitsgrad von 87 bis 92 Gew.-% eingesetzt. Als weitere Komponente weisen diese Dithionite in Abhängigkeit vom verwendeten Herstellungsverfahren Nebenprodukte wie Sulfite, Disulfite, Thiosulfate oder Formiate sowie gegebenenfalls weitere Verunreinigungen auf. Alkalidithionite, insbesondere Natriumdithionit, die einen Reinheitsgrad von 87 bis 92 Gew.% aufweisen, sind in dieser Form als Handelsprodukt weit verbreitet.

Sofern im erfindungsgemäßen Verfahren nach dem Formiatverfahren hergestelltes Alkalidithionit eingesetzt wird, wird es nach dem Fachmann bekannten Methoden, wie beispielsweise in DE-A 1 592 013 oder DE-A 27 03 282 beschrieben, hergestellt. In diesem so genannten Formiatverfahren wird Alkalidithionit, insbesondere Natriumdithionit, durch Reduktion von SO₂ mit dem entsprechenden Alkaliformiat und Alkalilauge, vorzugsweise Natronlauge (wässriges NaOH), hergestellt: Die Reaktion wird vorzugsweise in Methanol als Lösungsmittel durchgeführt. Das so genannte Formiatverfahren wird nachfolgend am Beispiel der Herstellung von Natriumformiat umrissen. Zunächst werden Kohlenmonoxid und Natronlauge in Methanol zu Natriumformiat (NaOOCH) umgesetzt, wobei das Methanol (zumindest teilweise) in den Natriumformiatprozess zurückgeführt wird. Die Natriumformiatvorlage wird mit Schwefeldioxid und Natronlauge bei erhöhtem Druck, vorzugsweise 3 bar, und erhöhter Temperatur, vorzugsweise-80 bis 90°C, zu Natriumdithionit umgesetzt. Anschließend findet eine Filtration des Produktes (Natriumdithionit) sowie gegebenenfalls ein weiterer Trocknungsschritt bei ca. 60 bis 70°C unter Normaldruck statt. In einer bevorzugten Ausführungsform wird das erfindungsgemäße Verfahren nach der Filtration der Suspension, die bei der Dithionitherstellung nach dem Formiatverfahren anfällt, durchgeführt. Das nach dem Formiatverfahren hergestellte Natriumdithionit weist einen Reinheitsgrad von ca. 87 bis 92 Gew.-% auf.

Als organisches Lösungsmittel eignen sich prinzipiell alle Lösungsmittel, die wasserlöslich bzw. mit Wasser mischbar sind. Beispiele für solche Lösungsmittel sind Tetrahydrofuran (THF), Dioxan, Ether, wie Dimethylether, und Alkohole. Bevorzugte Lösungsmittel haben einen Siedepunkt unter 100°C. Vorzugsweise werden Alkohole eingesetzt, wie Methanol, Ethanol, Isopropanol oder Butanol, besonders bevorzugt Methanol.

In dem organischen Lösungsmittel ist mindestens eine alkalisch reagierende Verbindung gelöst, wobei die alkalisch reagierende Verbindung ein Alkoholat ist. Unter dem Begriff "alkafisch reagierende Verbindung" sollen alle Verbindungen verstanden werden, die durch Lösen, Mischen oder sonstigen Kontakt mit Wasser einen pH-Wert von > 7 aufweisen. Als alkalisch reagierende Verbindung sind prinzipiell alle Alkoholate geeignet, die sich in den einzusetzenden organischen Lösungsmitteln lösen. Die einzusetzende Menge an alkalisch reagierender Verbindung muss mindestens 1 Gew.-%, bezogen auf die Menge an im erfindungsgemäßen Verfahren eingesetztem Alkalidithionit, betragen. Vorzugsweise wird die alkalisch reagierende Verbindung zu 1 bis 20 Ges.-%, mehr bevorzugt zu 1 bis 7 Gew.-%, besonders bevorzugt zu 2,5 bis 4,5 Gew.%, bezogen auf die Menge an Alkalidithionit in dem organischen Lösungsmittel gelöst. Die alkalisch reagierende Verbindung ist zu mindestens 1 Gew.-%, bezogen auf die Menge an verwendetem organischen Lösungsmittel, in dem organischen Lösungsmittel gelöst. Bevorzugt ist die alkalisch reagierende Verbindung zu 3 bis 12 Gew.-%, mehr bevorzugt zu 4 bis 10 Gew.-%, besonders bevorzugt zu 5 bis 8 Gew.-%, bezogen auf die Menge an verwendetem Lösungsmittel, in dem organischen Lösungsmittel gelöst.

Weiterhin sind alle Alkoholate bevorzugt, die sich sowohl in Methanol lösen, als auch alkalisch reagieren. Mehr bevorzugt sind Alkoholate, wie Natriummethanolat, Natriumethanolat sowie die beiden entsprechenden Kaliumverbindungen, besonders bevorzugt ist Natriummethanolat.

Im erfindungsgemäßen Verfahren wird das entsprechende Alkalidithionit mit dem organischen Lösungsmittel, in dem eine alkalisch reagierende Verbindung gelöst ist, behandelt. Unter Behandeln ist prinzipiell jegliche Art von In-Kontakt-Bringen des Alkalidithionits mit dem organischen Lösungsmittel zu verstehen. Dies umfasst das Zusammenschütten sowie Durchmischen, beispielsweise mit einem Rührer, der einzelnen Komponenten, wobei in einer Ausführungsform der vorliegenden Erfindung die alkalisch reagierende Verbindung in einer höheren Konzentration im organischen Lösungsmittel gelöst wird und einer Vorlage von Alkalidithionit und dem restlichen organischen Lösungsmittel separat zugegeben wird. Vorzugsweise wird die alkalisch reagierende Verbindung (in der Ausführungsform mit der höheren Konzentration) als 10 bis 50 gew.-%ige, pumpbare Lösung des entsprechenden Lösungsmittels eingesetzt, insbesondere Natriummethylat, in Form einer 20 bis 50 gew.-%igen, pumpbaren methanolischen Lösung. Unter Berücksichtigung des in der Vorlage sich befindlichen restlichen organischen Lösungsmittels beträgt die Menge an alkalisch reagierender Verbindung insgesamt mindestens 1 Gew.-%, bezogen auf die Menge an organischem Lösungsmittel.

Die Oberflächenbehandlung (Behandlung des Alkalidithionits mit einem organischen Lösungsmittel, in dem eine alkalisch reagierende Verbindung gelöst ist) dauert in der Regel einige Sekunden bis Minuten, kann gegebenenfalls jedoch auch länger durchgeführt werden. Vorzugsweise wird die Oberflächenbehandlung bei Raumtemperatur sowie Normaldruck durchgeführt, gegebenenfalls jedoch auch bei erhöhter Temperatur, wobei die maximale Temperatur den Siedepunkt des verwendeten Lösungsmittels nicht überschreiten darf. Gegebenenfalls kann die Oberflächenbehandlung auch bei erhöhtem Druck, beispielsweise unter Verwendung eines Druckdrehfilters durchgeführt werden. Vorzugsweise wird die Oberflächenbehandlung im Rahmen einer Filtration durchgeführt, wobei die üblichen Filtrationseinheiten unter dem Fachmann bekannten Standardbedingungen verwendet werden. Weiterhin ist es bevorzugt, dass der Filtrationsschritt im Rahmen der Herstellung des Alkalidithionits durchgeführt wird. Beispielsweise kann die Oberflächenbehandlung im Rahmen der Filtration der Suspension, die bei der Dithionitherstellung nach dem Formiatverfahren anfällt, durchgeführt werden.

Vorzugsweise kann im Anschluss an die Oberflächenbehandlung ein zusätzlicher Trocknungsschritt durchgeführt werden. Geeignet sind alle üblichen technischen Trocknungsverfahren, im Labor eignet sich insbesondere ein Rotationsverdampfer im Wasserstrahlvakuum. Dieser weitere Trocknungsschritt wird vorzugsweise bei 40 bis 80°C und/oder 0,1 bis 1 Stunde durchgeführt.

Ein weiterer Gegenstand der vorliegenden Erfindung ist das Alkalidithionit, das mit dem vorstehend beschriebenen erfindungsgemäßen Verfahren hergestellt wird. Vorzugsweise handelt es sich dabei um Natriumdithionit, besonders bevorzugt mit einem Reinheitsgrad von 87 bis 92 Gew.-%.

Das erfindungsgemäße Alkalidithionit weist einen gegenüber bisher bekanntem Alkalidithionit reduzierten Wassergehalt auf. Auf Grund des geringeren Wassergehaltes hat das erfindungsgemäße Alkalidithionit eine verringerte SO₂-Emission und somit eine verbesserte Stabilität bezüglich thermischer Zersetzung. Folglich weist es auch eine bessere Haltbarkeit auf, was für die Lagerfähigkeit des Handelsproduktes von großem Vorteil ist. Gegebenenfalls kann dem erfindungsgemäßen Alkalidithionit beispielsweise Soda zur zusätzlichen Stabilisierung zugegeben werden. Die Zugabe von Soda ist jedoch nicht zwingend erforderlich.

Sofern das erfindungsgemäße Alkalidithionit in Wasser gegeben wird, hat diese wässrige Lösung einen höheren pH-Wert als beispielsweise nach dem Formiatverfahren hergestelltes Alkalidithionit. Vorzugsweise hat das erfindungsgemäße Alkalidithionit in wässriger Lösung einen pH-Wert von größer 7,5, bevorzugt von 8,5 bis 12,5.

Die Erfindung soll anhand der Beispiele näher erläutert werden.

### Laborversuche werden wie folgt durchgeführt:

Jeweils 100 g Handelsware Hydrosulfit F (stabilisiert mit 1 bis 2 Gew.-% Soda) werden mit 50 ml Methanol und der berechneten Menge 20 gew.-%iger Natriummethylatlösung (gelöst in Methanol; in Tabelle 1 sind in der mittleren Spalte die entsprechenden Werte für das Methylat sowie die jeweilige Lösung angegeben) versetzt und am Rotationsverdampfer im Wasserstrahlvakuum bei 50°C 60 min lang getrocknet.

**Tabelle 1**

| **Beispiel Nr.** | **Zugegebenes Methylat** | **SO₂ im Gasraum*** | **pH-Wert 10 % in H₂O unter N₂** |
|---|---|---|---|
| 1 | ohne | 140 ppm | 7,0 |
| 2 | 3 g Methylat 15 g Lösung | 13 ppm | 11,3 |
| 3 | 4 g Methylat =̂20 g Lösung | < 10 ppm | 12,0 |
| 4 | 6 g Methylat =̂30 g Lösung | 14 ppm | 12,1 |

| | | | |
|---|---|---|---|
| * Messung nach 3 ½ Wochen | | | |

Wie der vorstehenden Tabelle 1 zu entnehmen ist, weist das nach dem erfindungsgemäßen Verfahren hergestellte und einer Oberflächenbehandlung unterzogene Alkalidithionit eine erhöhte Stabilität gegenüber nicht behandelter Handelsware (Beispiel 1) auf, die gemäß dem Formiatverfahren hergestellt worden ist.

## Patentansprüche

1. Verfahren zur Oberflächenbehandlung von Alkalidithionit, **dadurch gekennzeichnet, dass** Alkalidithionit mit einem organischen Lösungsmittel behandelt wird und in dem organischen Lösungsmittel eine alkalisch reagierende Verbindung zu mindestens 1 Gew.-%, bezogen auf die Menge an Alkalidithionit, gelöst ist, wobei die alkalisch reagierende Verbindung ein Alkoholat ist.

2. Verfahren gemäß Anspruch 1, **dadurch gekennzeichnet, dass** Natriumdithionit verwendet wird.

3. Verfahren gemäß Anspruch 1 oder 2, **dadurch gekennzeichnet, dass** das organische Lösungsmittel ein Alkohol, insbesondere Methanol, ist.

4. Verfahren gemäß einem der Ansprüche 1 bis 3, **dadurch gekennzeichnet, dass** die alkalisch reagierende Verbindung Natriummethanofat ist.

5. Verfahren gemäß einem der Ansprüche 1 bis 4, **dadurch gekennzeichnet, dass** das Alkalidithion'tt, insbesondere Natriumdithionit, vor der Oberflächenbehandlung einen Reinheitsgrad von 87 bis 92 Gew.-% aufweist.

6. Verfahren gemäß einem der Ansprüche 1 bis 5, **dadurch gekennzeichnet, dass** das Alkalidithionit durch Reduktion von SO₂ mit Alkaliformiat und Alkalilauge hergestellt wird.

7. Verfahren gemäß einem der Ansprüche 1 bis 6, **dadurch gekennzeichnet, dass** die Oberflächenbehandlung im Rahmen einer Filtration bei der Herstellung des Alkalidithionits durchgeführt wird.

8. Verfahren gemäß einem der Ansprüche 1 bis 7, **dadurch gekennzeichnet, dass** die alkalisch reagierende Verbindung zu 1 bis 7 Gew.%, bezogen auf die Menge an Alkalidithionit, und/oder zu 4 bis 10 Gew.%, bezogen auf die Menge an Lösungsmittel, in dem organischen Lösungsmittel gelöst ist.

9. Verfahren gemäß einem der Ansprüche 1 bis 8, **dadurch gekennzeichnet, dass** im Anschluss an die Oberflächenbehandlung ein Trocknungsschritt durchgeführt wird.

## Claims

1. A process for the surface treatment of alkali metal dithionite, wherein alkali metal dithionite is treated with an organic solvent and an alkaline compound is dissolved in the organic solvent in an amount of at least 1% by weight, based on the amount of alkali metal dithionite, where the alkaline compound is an alkoxide.

2. The process according to claim 1, wherein sodium dithionite is used.

3. The process according to claim 1 or 2, wherein the organic solvent is an alcohol, in particular methanol.

4. The process according to any of claims 1 to 3, wherein the alkaline compound is sodium methoxide.

5. The process according to any of claims 1 to 4, wherein the alkali metal dithionite, in particular sodium dithionite, has a purity of from 87 to 92% by weight prior to the surface treatment.

6. The process according to any of claims 1 to 5, wherein the alkali metal dithionite is prepared by reduction of SO₂ by means of alkali metal formate and alkali metal hydroxide.

7. The process according to any of claims 1 to 6, wherein the surface treatment is carried out during a filtration in the preparation of the alkali metal dithionite.

8. The process according to any of claims 1 to 7, wherein the alkaline compound is present in solution in the organic solvent in an amount of from 1 to 7% by weight based on the amount of alkali metal dithionite and/or from 4 to 10% by weight based on the amount of solvent.

9. The process according to any of claims 1 to 8, wherein a drying step is carried out subsequent to the surface treatment.

## Revendications

1. Procédé pour le traitement de surface de dithionite alcalin, **caractérisé en ce que** le dithionite alcalin est traité avec un solvant organique et un composé à réaction alcaline est dissous raison d'au moins 1% en poids, par rapport à la quantité de dithionite alcalin, dans le solvant organique, le composé à réaction alcaline étant un alcoolate.

2. Procédé selon la revendication 1, **caractérisé en ce qu'**on utilise du dithionite de sodium.

3. Procédé selon la revendication 1 ou 2, **caractérisé en ce que** le solvant organique est un alcool, en particulier le méthanol.

4. Procédé selon l'une quelconque des revendications 1 à 3, **caractérisé en ce que** le composé à réaction alcaline est le méthanolate de sodium.

5. Procédé selon l'une quelconque des revendications 1 à 4, **caractérisé en ce que** la dithionite alcaline, en particulier le dithionite de sodium présente, avant le traitement de surface, un degré de pureté de 87 à 92% en poids.

6. Procédé selon l'une quelconque des revendications 1 à 5, **caractérisé en ce que** le dithionite alcalin est préparé par réduction de SO₂ par du formiate alcalin et de la lessive alcaline.

7. Procédé selon l'une quelconque des revendications 1 à 6, **caractérisé en ce que** le traitement de surface est réalisé dans le cadre d'une filtration lors de la préparation du dithionite alcalin.

8. Procédé selon l'une quelconque des revendications 1 à 7, **caractérisé en ce que** le composé à réaction alcaline est dissous à raison de 1 à 7% en poids, par rapport à la quantité de dithionite alcalin, et/ou à raison de 4 à 10% en poids, par rapport à la quantité de solvant, dans le solvant organique.

9. Procédé selon l'une quelconque des revendications 1 à 8, **caractérisé en ce qu'**une étape de séchage est réalisée après le traitement de surface.
